# EUROPÄISCHE PATENTSCHRIFT

(11) **EP 2 430 373 B1**
(45) Veröffentlichungstag und Bekanntmachung des Hinweises auf die Patenterteilung: **07.12.2016**
(21) Anmeldenummer: 09808985.7
(22) Anmeldetag: 31.12.2009
(51) Int. Cl.: F24J 2/07, F24J 2/10, F24J 2/24, F24J 2/18, F24J 2/14

(54) **Sonnen-Rinnenkollektor**
Solar trough collector
collecteur de soleil cylindro-parabolique

(30) Priorität: 31.12.2008 DE 102008063424; 16.04.2009 DE 102009017741
(43) Veröffentlichungstag der Anmeldung: 21.03.2012
(73) Patentinhaber: Ahnert, Axel, 85737 Ismaning (DE); Ahnert, Peter, 85737 Ismaning (DE)
(72) Erfinder: Ahnert, Axel, 85737 Ismaning (DE); Ahnert, Peter, 85737 Ismaning (DE)
(74) Vertreter: Strasser, Wolfgang
(86) Internationale Anmeldenummer: PCT/DE2009/001820
(87) Internationale Veröffentlichungsnummer: WO 2010/075850

(56) Entgegenhaltungen:
- EP-A1- 1 008 820
- EP-A1- 1 965 149
- DE-A1- 4 430 517
- DE-A1- 19 926 051
- US-A- 4 069 812

## Beschreibung

Die Erfindung betrifft einen Sonnen-Rinnenkollektor der im Oberbegriff von Anspruch 1 genannten Art.

Es sind Solarkraftwerke bekannt, bei denen mit Hilfe einer Vielzahl von Parabol-Rinnenkollektoren Sonnenlicht in Wärme umgewandelt wird. Bei diesen Rinnenkollektoren handelt es sich um einachsig parabolisch geformte Spiegel, die in langen Reihen angeordnet werden und von denen jeder die auf ihn auftreffende Sonnenstrahlung auf eine Brennlinie bündelt, in welcher ein den zentralen Bestandteil eines Receiverrohrs bildendes Absorberrohr angeordnet und mit den Absorberrohren der Nachbarspiegel verbunden ist, um so einen Strömungsweg für ein Wärmeträgermedium (im allgemeinen ein Wärmeträgeröl) zu bilden, das, nachdem es in der Absorberrohranordnung auf bis zu 400° C erhitzt worden ist, zu einem Wärmetauscher gelangt, in welchem Wasserdampf erzeugt wird, der über eine Turbine einen Generator für elektrischen Strom antreibt. Bei anderen Varianten wird in der Absorberrohranordnung unmittelbar Wasserdampf erhitzt. Zusätzlich zum Absorberrohr umfasst das Receiverrohr ein gasdicht verschlossenes Hüllrohr, welches das Absorberrohr umgibt und evakuiert oder mit einem schlecht wärmeleitenden Gas gefüllt ist, um das Absorberrohr thermisch zu isolieren. Das Absorberrohr ist an den Endbereichen des Hüllrohrs aus diesem herausgeführt, um eine Strömungsverbindung mit den Absorberrohren der Nachbarspiegel herstellen zu können.

Ein Receiverrohr der eben beschriebenen Art kann z.B. der DE 103 05 428 A1 entnommen werden.

Um mit einem Rinnenkollektor-Solarkraftwerk eine Leistung von beispielsweise 50 Megawatt zu erzielen, kommen Parabolspiegel mit einer Spiegelfläche von ca. 360.000 Quadratmetren zum Einsatz die mit 15.000 Receiverrohren bestückt sind, die eine Gesamtlänge von 60 Kilometern besitzen.

Nachteilig an den bekannten Sonnen-Rinnenkollektoren ist, dass die absolut gasdicht geschlossenen Hüllrohre ihrer Receiverrohre vollständig aus Glas bestehen und daher eine gewisse Bruchneigung aufweisen, was dazu führen kann, dass innerhalb kurzer Zeit eine Vielzahl von Receiverrohren die thermische Isolation verliert und ausgetauscht werden muss, weil sich ansonsten der Wirkungsgrad der Anlage zu sehr verschlechtert. Da während eines solchen Austausches, der mit einer Unterbrechung des Strömungsweges für das Wärmeträgermedium verbunden ist, zumindest Teile der Anlage stillgelegt werden müssen, wird man ihn nur zu Zeiten geringer oder fehlender Sonneneinstrahlung, insbesondere am Abend oder Nachts durchführen. Dies ist einerseits mit einem zusätzlichen Aufwand verbunden und bedeutet andererseits, dass die Anlage bis zum Eintreten eines für den Austausch günstigen Zeitraums nur mit vermindertem Wirkungsgrad weiterbetrieben werden kann.

Demgegenüber liegt der Erfindung die Aufgabe zugrunde, einen Sonnen-Rinnenkollektor der Eingangs genannten Art so weiterzubilden, dass sein Receiverrohr kostengünstig hergestellt und einfach montiert werden kann und aufgrund einer wesentlich verbesserten Bruchfestigkeit eine erhöhte Lebensdauer besitzt, wodurch die Häufigkeit von Austauschvorgängen erheblich vermindert wird.

Zur Lösung dieser Aufgabe sieht die Erfindung die im Anspruch 1 zusammengefassten Merkmale vor.

Dadurch, dass das Hüllrohr zwei vorzugsweise durch einen hitzefesten Siliconkleber miteinander verbundene Mantelteile umfasst, von denen nur der erste aus einem vergleichsweise bruchgefährdeten Material besteht, während der zweite aus einem bruchfesten Material, insbesondere Metall und besonders bevorzugt, aus Edelstahl hergestellt ist, wird die Festigkeit des Receiverrohrs erheblich gesteigert, weil der bruchfeste Mantelteil praktisch alle Kräfte aufnehmen kann, die auf das Receiverrohr bei der Herstellung, bei der Lagerung, beim Transport, bei der Montage und während des Betriebs einwirken. Der erste, weniger bruchfeste Mantelteil stellt praktisch ein vom zweiten Mantelteil getragenes und stabilisiertes Fenster dar, das gerade so groß ist, dass im montierten Zustand die vom zugehörigen Rinnenkollektor reflektierte Sonnenstrahlung durch es hindurch in das Innere des Hüllrohrs eintreten und auf das Absorberrohr auftreffen kann. Die Durchführungen durch das Hüllrohr, welche für eine Verbindung des Absorberrohrs mit den Absorberrohren der benachbarten Receiverrohre erforderlich sind, können im zweiten Mantelteil ausgeführt werden, der insbesondere dann, wenn er aus Metall besteht, ohne weiteres die Kräfte aufnehmen kann, die beispielsweise bei durch Temperaturschwankungen bedingten Längenänderungen auftreten, sodass im Grundsatz auf die beim Stand der Technik erforderlichen, mit den Enden des Absorberrohrs verbundenen und im Allgemeinen in die Enden des aus Glas bestehenden Hüllrohrs eingeschweißten Längenausgleichs-Balgen zumindest dann verzichtet werden kann, wenn entsprechend große Wandstärken verwendet werden. Wenn dies nicht erwünscht ist, können auch bei dem Receiverrohr eines Rinnen-Sonnenkollektors gemäß der Erfindung derartige Ausgleichsbalgen eingesetzt werden.

Ein besonderer Vorteil eines erfindungsgemäßen Sonnen-Rinnenkollektors ist darin zu sehen, dass selbst dann, wenn es zu einem Bruch des ersten, strahlungsdurchlässigen, im Regelfall aus einem kostengünstigen Glas bestehenden Mantelteils kommt, kein vollständiger Austausch des betreffenden Receiverrohrs erforderlich ist. Vielmehr kann, ohne dass der Betrieb der Anlage unterbrochen wird, der gebrochene erste Mantelteil von dem an seinem Einbauort bleibenden und das Absorberrohr tragenden zweiten Mantelteil gelöst und durch ein neues "Glasfenster" ersetzt werden.

Ein weiteres Problem bei Solarkraftwerken mit Sonnen-Rinnenkollektoren besteht darin, dass letztere wegen ihrer erheblichen Ausdehnung häufig nicht über ihre gesamte Länge hinweg den gleichen Umgebungsbedingungen ausgesetzt sind. So kann durch unterschiedliche Luftströmungen eine lokal begrenzte Abkühlung des Kollektormaterials auftreten, die nicht den gesamten Sonnen-Rinnenkollektor erfasst, sodass es zu örtlichen Verformungen und damit zu Abweichungen von der idealen Parabolform kommt. Solche Abweichungen können auch durch eine nicht optimale Montage der Kollektoren entstehen bzw. müssen bei dem Strand der Technik entsprechenden Anlagen durch einen sehr hohen konstruktiven und arbeitstechnischen Aufwand so klein wie möglich gehalten werden.

In jedem Fall ist davon auszugehen, dass die Brennlinien der meisten Sonnen-Rinnenkollektoren zumindest zeitweise oder sogar permanent nicht in idealer Weise vollständig auf dem zugehörigen Absorberrohr liegen. Zur Behebung solcher Fokussierungsfehler schlägt die DE 103 05 428 A1 vor, an dem aus Glas bestehenden Hüllrohr eine Struktur auszubilden, die über Beugung und/oder Brechung das Sonnenlicht auf das im Hüllrohr angeordnete Absorberrohr fokussiert. Diese Strukturierung der Hüllrohrwand hat jedoch lokal unterschiedliche Materialstärken zur Folge und erschwert und verteuert die Herstellung eines solchen Glasrohrs erheblich. Weiterhin werden in der DE 103 05 428 A1 andere, zur Behebung von Fokussierungsfehlern dienende Sekundärkonzentratoren erwähnt, bei denen es sich z.B. um ein poliertes Blech handelt, das im Inneren des Hüllrohrs entweder an diesem oder am Absorberrohr befestigt wird. Diese Art von Sekundärkonzentratoren wird als nachteilig bezeichnet, weil sie zu einer Verschattung des Absorberrohres und damit einer Verschlechterung des Wirkungsgrades führen. Außerdem stellt ein solches Blech ein zusätzliches Bauteil dar, durch dessen Herstellung und Montage sich die Kosten für ein Receiverrohr erhöhen.

Zur Lösung dieses Problems ist gemäß einer besonders vorteilhaften Weiterbildung des erfindungsgemäßen Sonnen-Rinnenkollektors vorgesehen, den zweiten Mantelteil so zu formen und auszubilden, dass er als Sekundärkonzentrator wirkt, d.h. Sonnenstrahlung, die auf ihn auftrifft, weil sie von dem zugehörigen Sonnen-Rinnenkollektor nicht auf das Absorberrohr geworfen wird, auf das Absorberrohr hin bündelt.

Zu diesem Zweck kann der zweite Mantelteil auf seiner konkaven Innenseite entweder eine glatte Oberfläche besitzen, die insbesondere durch Verspiegelung reflektierend ausgebildet ist, oder es können auf dieser Innenseite Strukturen vorgesehen sein, die zu einer Abweichung von der glatten Oberfläche führen und so ausgebildet sind, dass sie in der Weise eine Lichtlenkungsfunktion ausüben, dass sie mit ihren reflektierenden, insbesondere verspiegelten Oberflächen auf das Absorberrohr Sonnenlicht lenken, dessen Energiegehalt ansonsten verloren gehen würde. Da der zweite Mantelteil aus einem leicht zu bearbeitenden Material, insbesondere aus Metall besteht, können die erwähnten Strukturen, die erhaben oder vertieft sein können, an ihm einfach und kostengünstig einstückig ausgebildet oder befestigt werden. Zusätzliche Bauelemente, wie sie in dem oben erläuterten Stand der Technik erwähnt werden, sind dabei nicht erforderlich. Die geringfügige Abschattung des Absorberrohrs gegen von außen her auf den zweiten Mantelteil auftreffende Sonnenstrahlung kann in Kauf genommen werden, da die hierdurch bewirkte, geringe Einbuße an Energieausbeute durch die übrigen Vorteile bei weitem überwogen wird.

Aus der DE 44 30 517 A1 ist ein Sonnen-Rinnenkollektor bekannt, bei dem sich ein Absorberrohrkörper in Längsrichtung im Fokusbereich des Rinnenspiegels erstreckt. Der Absorberrohrkörper besitzt jedoch einen sehr komplexen Aufbau in Art einer Heatpipe, die mit einem Wärmeträgermedium gefüllt ist, das sich an einer konkaven Absorberfläche, welche die von der Spiegelfläche des Rinnenkollektors reflektierte Solarstrahlung absorbiert, verdampft und an einem exzentrisch angeordneten Verdampferrohr kondensiert, wobei es die in ihm enthaltene Solarenergie auf ein durch das Verdampferrohr strömendes Wärmetransportmedium überträgt, das zur Abfuhr der Wärme dient. Bei einem der beiden gezeigten Ausführungsbeispiele besteht die äußere Hülle des Absorberstrangs aus zwei hohlzylindrischen Teilen, von denen der eine als Glasabdeckung bezeichnet wird, während über das Material des anderen, als Träger bezeichneten Teils keine Aussage gemacht wird. Aus der Tatsache, dass die beiden Teile an ihren Längskanten miteinander verschweißt sind, ist jedoch zu schließen, dass auch der Träger aus Glas bestehen soll. Dies wird auch durch das zweite Ausführungsbeispiel nahe gelegt, bei dem das gesamte Hüllrohr aus Glas besteht.

Bei herkömmlichen Sonnen-Rinnenkollektoren, mit Receiverrohren, deren Hüllrohr jeweils aus einem einstückigen, gasdicht verschlossenen Glaszylinder besteht, tritt weiterhin das Problem auf, dass im Laufe der Zeit durch Diffusionsvorgänge, bei denen z.B. aus dem Wärmeträgeröl stammender Wasserstoff durch das Absorberrohr hindurch in den Innenraum des Hüllrohrs gelangt, das vorhandene Vakuum verschlechtert bzw. die Wärmeleitfähigkeit des dort vorhandenen Gases erhöht wird. Auch aus der Absorptionsschicht des Absorberrohrs ausdiffundierende Substanzen können eine derartige Wirkung entfalten. Aus dem Stand der Technik ist es zwar bekannt, im Innenraum des Hüllrohrs Fänger für den Wasserstoff und/oder andere störende Substanzen anzuordnen, um die Lebensdauer der Receiverrohre zu verlängern. Dies führt wegen der zusätzlichen Bauteile ebenfalls zu einer Erhöhung der Herstellungskosten. Außerdem tritt irgendwann eine Sättigung dieser Fänger ein, wodurch sich das thermische Isolationsvermögen des Hüllrohrs so stark verschlechtert, dass ein Austausch unvermeidlich wird, der, wie oben bereits erläutert, bei herkömmlichen Receiverrohren zu einer Betriebsunterbrechung und den damit verbundenen Nachteilen führt.

Zur Beseitigung dieser Schwierigkeiten ist bei einer besonders bevorzugten Variante des erfindungsgemäßen Sonnen-Rinnenkollektors ein Receiverrohrs mit einer Ventilanordnung vorgesehen, die sich durch die Wand des zweiten Mantelteils hindurch von außen in den Innenraum hinein erstreckt.

Diese Ventilanordnung kann entweder nur ein Ventil umfassen, das zur Nachbesserung des im Innenraum des Hüllrohrs vorhandenen Vakuums über eine Absaugleitung mit einer Gasabsaugpumpe verbunden werden kann. Da es zweckmäßig ist, die Ventile mehrerer Hüllrohre an eine einzige Absaugleitung anzuschließen, ist jedes dieser Ventile als Rückschlagventil ausgebildet, um zu vermeiden, dass beim Bruch eines der Hüllrohre die gesamte Absaugleitung und alle mit ihr über die erwähnten Ventile verbundenen Hüllrohre mit Umgebungsluft gefüllt werden.

Für Receiverrohre, deren Hüllrohr mit einem wärmeisolierenden Gas, beispielsweise Helium oder Stickstoff gefüllt ist, können dagegen zwei Ventile vorgesehen sein, von denen das eine als Zuführ- und das andere als Absaugventil dient und mit einer entsprechenden Leitung verbunden ist. Diese Anordnung ermöglicht es, den Innenraum des Hüllrohres immer dann zu spülen und mit frischem Gas zu beschicken, wenn sich ein zu großer Anteil von störenden Substanzen angereichert hat. Ein besonderer Vorteil besteht darin, das die betreffenden Evakuierungs- bzw. Spülvorgänge einen Austausch des betreffenden Receiverrohrs überflüssig machen und bei laufendem Betreib durchgeführt werden können.

Auch hier sind immer die Ventile mehrere Hüllrohre mit ein und derselben Gaszuführleitung und ein und derselben Gasabsaugleitung verbunden. Da vorzugsweise der Betriebsdruck des wärmeisolierenden Gases sowohl in den Hüllrohren als auch in der Gaszuführleitung weit unterhalb des Atmosphärendrucks liegt (z.B. in der Größenordnung von 0,05 bar) sind aus den gleichen Gründen wie oben vorzugsweise beide Ventile eines jeden Hüllrohrs als Rückschlagventile ausgebildet.

Vorteilhafter Weise ist vorgesehen, im Innenraum des Receiverrohrs wenigstens einen, vorzugsweise zwei Temperatursensoren anzuordnen, mit denen die Temperatur des Absorberrohrs am Zufluss- und/oder Abflussende gemessen wird. Dadurch ist es einerseits möglich, die in dem betreffenden Receiverrohr in das Wärmeträgermedium eingebrachte Wärmemenge zu erfassen und andererseits einen zu starken Temperaturanstieg rechtzeitig zu erkennen, um eine Überhitzung des Absorberrohrs zu verhindern.

Weiterhin ist bevorzugt, im Innenraum des Receiverrohrs wenigstens einen Wasserstoffsensor anzuordnen, mit dessen Hilfe erkannt werden kann, wenn der Wasserstoffgehalt einen zu hohen Wert erreicht. Das ist von Bedeutung, weil ein zu hoher Wasserstoffgehalt die Wärmeisolation des Absorberrohrs verschlechtert. Wird hier ein vorgebbarer Grenzwert überschritten, kann bei einem Receiverrohr, in dem eigentlich ein Vakuum vorhanden sein sollte, eine Gasabsaugung mit Hilfe des beschriebenen Ventils erfolgen. Bei Receiverrohren, die mit einem schlecht wärmeleitenden Gas gefüllt sind, kann mit Hilfe der beiden erwähnten Ventile eine Gasspülung durchgeführt werden, um den eindiffundierten Wasserstoff zu beseitigen.

Auch ist im Innenraum von mit Vakuum betriebenen Receiverrohren ein Drucksensor vorgesehen, mit dessen Hilfe eine Verschlechterung des Vakuums frühzeitig erkannt werden kann, um dann einen Absaugvorgang durchzuführen.

Diese und weitere vorteilhafte Ausgestaltungen eines erfindungsgemäßen Sonnen-Rinnenkollektors sind in den Unteransprüchen niedergelegt.

Die Erfindung wird im Folgenden anhand von Ausführungsbeispielen unter Bezugnahme auf die Zeichnung beschrieben; in dieser zeigen:
- Fig. 1: eine schematische, auseinander gezogene, perspektivische Darstellung der wesentlichen Bestandteile einer ersten Ausführungsform eines Receiverrohrs für einen erfindungsgemäßen Sonnen-Rinnenkollektor,
- Fig. 2: das Receiverrohr aus Fig. 1 im teilweise zusammengebauten Zustand, wobei der für die Sonnenstrahlung durchlässige erste Mantelteil der Deutlichkeit halber weggelassen ist,
- Fig. 3: das Receiverrohr aus den Fig. 1 und 2 im vollständig zusammengebauten Zustand,
- Fig. 4: eine der Fig. 1 entsprechende Darstellung einer zweiten Ausführungsvariante,
- Fig. 5: das Receiverrohr aus Fig. 4 im teilweise zusammengebauten Zustand, wobei der für die Sonnenstrahlung durchlässige erste Mantelteil der Deutlichkeit halber weggelassen ist,
- Fig. 6: das Receiverrohr aus den Fig. 4 und 5 im vollständig zusammengebauten Zustand,
- Fig. 7: eine perspektivische Darstellung eines zweiten Mantelteils eines Receiverrohrs mit sich in Längsrichtung erstreckenden, radial nach innen vorstehenden Lamellen mit gleicher radialer Erstreckung,
- Fig. 8: einen senkrecht zur Längsachse des zweiten Mantelteils aus Fig. 7 verlaufenden Schnitt,
- Fig. 9: eine perspektivische Darstellung eines zweiten Mantelteils eines Receiverrohrs mit sich in Längsrichtung erstreckenden, radial nach innen vorstehenden Lamellen mit unterschiedlicher radialer Erstreckung,
- Fig. 10: einen senkrecht zur Längsachse des zweiten Mantelteils aus Fig. 9 verlaufenden Schnitt,
- Fig. 11: eine perspektivische Darstellung eines kurzen Abschnitts eines zweiten Mantelteils eines Receiverrohrs mit sich in die Längs- und Querrichtung wiederholenden, radial nach innen vorstehenden Strukturen mit rechteckigem Grundriss,
- Fig. 12: einen senkrecht zur Längsachse des zweiten Mantelteils aus Fig. 11 verlaufenden Schnitt,
- Fig. 13: eine perspektivische Darstellung eines kurzen Abschnitts eines zweiten Mantelteils eines Receiverrohrs mit sich in Längs- und Querrichtung wiederholenden, radial nach innen vorstehenden Strukturen mit polygonalem Grundriss,
- Fig. 14: einen senkrecht zur Längsachse des zweiten Mantelteils aus Fig. 13 verlaufenden Schnitt,

- Fig. 15: eine perspektivische Darstellung eines kurzen Abschnitts eines zweiten Mantelteils eines Receiverrohrs mit sich in Längs- und Querrichtung wiederholenden, radial nach außen vorstehenden Strukturen mit rundem Grundriss,
- Fig. 16: eine Draufsicht auf den Mantelteilabschnitt aus Fig. 15,
- Fig. 17: einen senkrecht zur Längsachse des zweiten Mantelteils aus Fig. 15 verlaufenden Schnitt und
- Fig. 18: eine Seitenansicht des Mantelteilabschnitts aus Fig. 15.

In den Figuren, in denen der Einfachheit halber die Rinnenkollektoren sowie die zum Tragen der Receiverrohre dienenden Strukturen weggelassen wurden, sind gleiche bzw. einander entsprechende Teile mit den gleichen Bezugszeichen bezeichnet.

Wie man den Figuren entnimmt, umfasst ein Receiverrohr 1 eines erfindungsgemäßen Sonnen-Rinnenkollektors ein lang gestrecktes Absorberrohr 2, das in herkömmlicher Weise mit einer nicht gesondert dargestellten Absorberbeschichtung versehen ist, die dazu dient, einen möglichst großen Teil der von einem Rinnenkollektor und gegebenenfalls einem Sekundärkonzentrator auf das Absorberrohr 2 gebündelten Sonnenstrahlung in Wärme umzusetzen, durch die ein im Betrieb das Absorberrohr 2 durchströmendes Wärmeträgermedium (typischer Weise ein Wärmeträgeröl oder aber auch Wasserdampf) erhitzt wird.

Das Absorberrohr 2 ist über seine gesamte Länge von einem Hüllrohr umgeben, das gemäß der Erfindung zwei Mantelteile 4, 5 umfasst, die aus unterschiedlichen Materialien bestehen, sich über die gesamte Länge des Receiverrohrs 1 erstrecken und längs zweier Mantellinien beispielsweise mit Hilfe eines hitzefesten Siliconklebers oder auf beliebige andere Weise gasdicht miteinander verbunden sind. Sie umschließen gemeinsam mit zwei senkrecht zur Achse des Receiverrohrs 1 verlaufenden Stirnwänden 6, 7 in gasdichter Weise einen Innenraum 8, dessen Volumen größer als das Volumen des Absorberrohrs 2 ist. Um dieses thermisch zu isolieren, ist der Innenraum 8 des Hüllrohrs entweder evakuiert oder mit einem Gas gefüllt, das einen schlechten Wärmeleiter bildet und insbesondere durch Konvektion wenig Wärme transportiert. Die Längsachsen des Hüllrohrs und des Absorberrohrs 2 verlaufen zueinander parallel und können, müssen aber nicht notwendiger Weise zusammenfallen; letzteres ist in den Figuren gezeigt.

Der erste Mantelteil 4, der im montierten Zustand des Receiverrohrs 1 dem Rinnenkollektor zugewandt ist, besteht aus einem Material, das eine hohe Durchlässigkeit für Sonnenstrahlung besitzt, insbesondere aus Glas. Bei den gezeigten Ausführungsbeispielen besitzt der erste Mantelteil 4 einen nach außen kreisbogenförmig gewölbten, d.h. konvexen Querschnitt. Er kann aber auch jede andere Form besitzen, beispielsweise als ebene Platte oder nach innen gewölbt ausgebildet sein. Weiterhin kann er optische Strukturen aufweisen, welche die Fokussierung der vom Rinnenkollektor reflektierten Sonnenstrahlung verbessern.

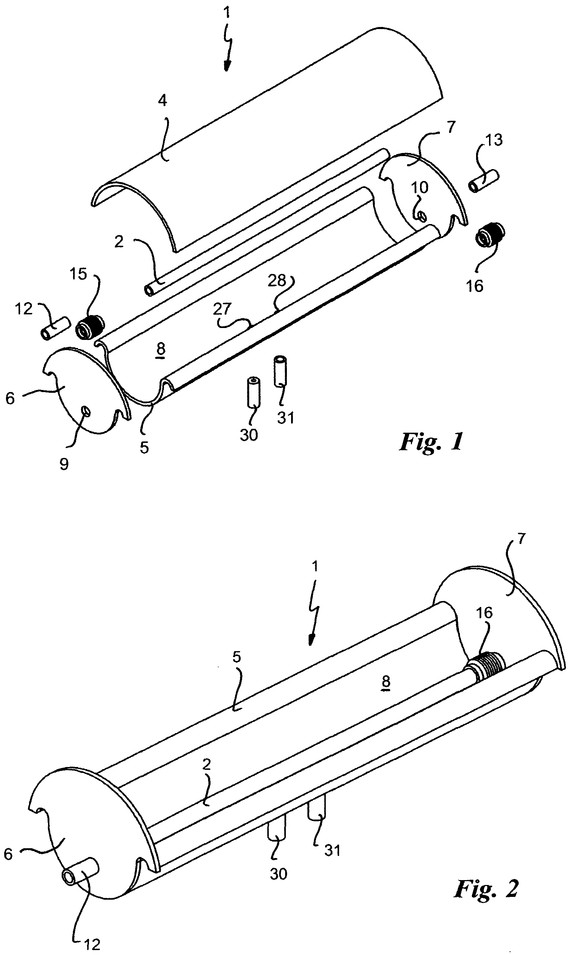

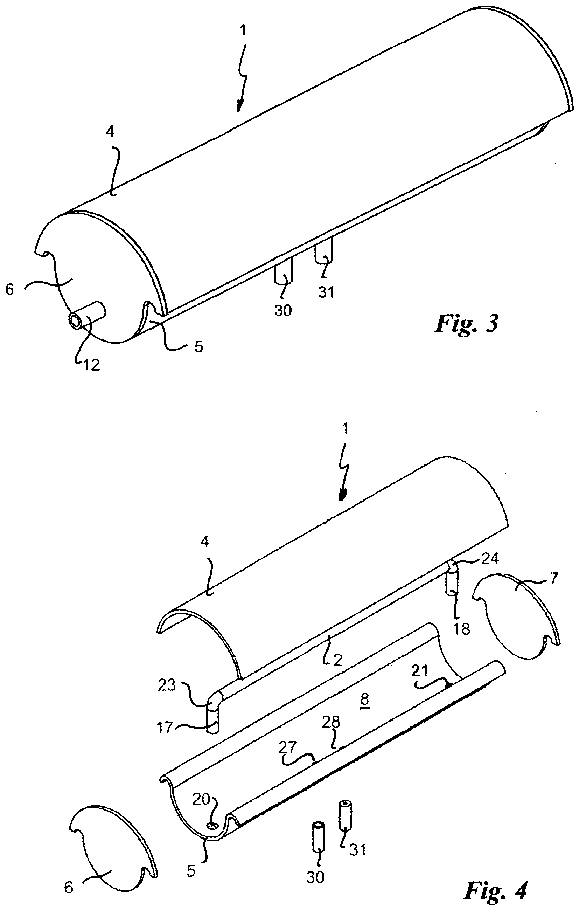

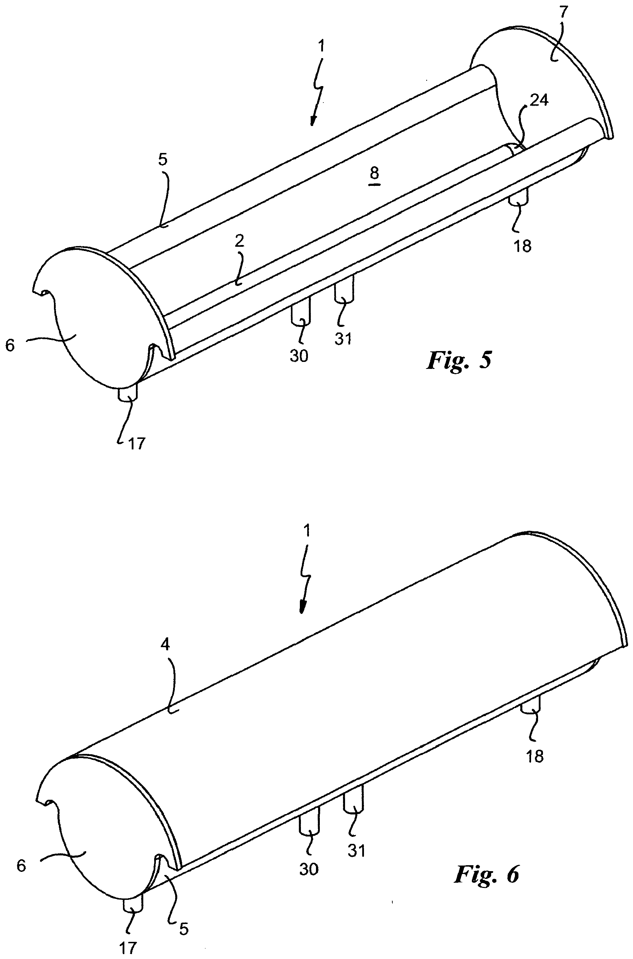

Der zweite Mantelteil 5 besteht aus einem Material mit hoher mechanischer Festigkeit, beispielsweise aus Metall, insbesondere Edelstahl. Vorzugsweise ist der zweite Mantelteil 5 dadurch als Reflektor ausgebildet, dass er auf seiner Innenseite eine für Sonnen- und/oder Wärmestrahlung reflektierende Schicht aufweist. In den Fig. 1, 2, 4 und 5 besitzt er eine glatte bzw. strukturlose Innenfläche mit einer (insbesondere einachsig parabolischen) Form, die geeignet ist, durch den ersten Mantelteil 4 in den Innenraum 8 des Hüllrohrs eintretende Strahlung, die nicht direkt auf das Absorberrohr 2 trifft, auf dieses hin zurück zu werfen und zu bündeln, um so den Wirkungsgrad des Receiverrohrs 1 zu steigern.

Die beiden Stirnwände 6, 7 bestehen vorzugsweise aus dem gleichen Material wie der zweite Mantelteil 5 und sind sowohl mit diesem als auch dem ersten Mantelteil gasdicht verbunden.

Receiverrohre werden zur Sonnenenergieumwandlung nicht für sich allein, sondern in langen Reihen hintereinander geschaltet verwendet, wobei ihre Absorberrohre zu einem durchgehenden Strömungsweg verbunden sind, durch den das Wärmeträgermedium fließen kann.

Um die entsprechende Verbindung des Absorberrohrs 2 mit den Absorberrohren der benachbarten Receiverrohre zu ermöglichen, weist bei dem in Fig. 1 gezeigten Ausführungsbeispiel jede der Stirnwände 6, 7 eine durchgehende Bohrung 9, 10 auf, in der ein Durchführungs-Rohrstutzen 12 bzw. 13 mit Hilfe eines thermisch isolierenden Dichtungselementes (nicht dargestellt) so montiert ist, dass er mit einem freien Ende aus dem gasdicht verschlossenen Receiverrohr 1 herausragt, während sein im Innenraum 8 befindliches Ende über ein Ausgleichselement 15 mit dem ihm zugewandten Ende des Absorberrohrs 2 verbunden ist. Das zur Kompensation von thermisch bedingten oder sonstigen, im Betrieb auftretenden unterschiedlichen Längenänderungen zwischen Absorberrohr 2 und Hüllrohr dienende Ausgleichselement 15 kann beispielsweise als Metallbalgen ausgebildet sein und ist vor allem dann von Vorteil, wenn der zweite Mantelteil 5 und/oder die Stirnwände 6, 7 mit einer so geringen Materialstärke ausgeführt werden sollen, dass sie die bei den erwähnten unterschiedlichen Längenänderungen auftretenden Kräfte nicht ohne weiteres aufnehmen können.

Bei dem in Fig. 2 gezeigten Ausführungsbeispiel sind die Durchführungs-Rohrstutzen 17, 18 in den Endbereichen des Receiverrohrs 1 nicht durch die Stirnwände 6, 7 sondern durch Bohrungen 20, 21 herausgeführt, die in dem dem ersten Mantelteil 4 gegenüber liegenden "Boden"-Bereich des zweiten Mantelteils 5 angeordnet sind. Auch hier sind in den Figuren nicht dargestellte Wärmeisolatoren vorgesehen, um einen Wärmeübergang von den Durchführungs-Rohrstutzen 17, 18 auf den zweiten Mantelteil 5 möglichst weitgehend zu verhindern. Die Rohrstutzen 17, 18 sind über Rohrbögen 23, 24 mit den Enden des Absorberrohrs 2 verbunden, die für Abwinkelungen von jeweils 90° oder mehr sorgen. Die gesamte Anordnung ist so getroffen, dass sie unterschiedliche Längenänderungen des zweiten Mantelteils 5 und des Absorberrohrs 2 durch elastische Verformung ausgleichen kann.

Bei beiden Ausführungsformen sind im zweiten Mantelteil 5 weiterhin zwei Bohrungen 27, 28 vorgesehen, in welche jeweils ein als Rückschlagventil ausgebildetes Ventil 30 bzw. 31 gasdicht eingesetzt ist. Um den Innenraum 8 des Hüllrohrs mit frischem wärmeisolierenden Gas spülen zu können, sind diese Ventile 30, 31 mit nicht dargestellten Gas-Zuführ- bzw. -Absaugleitungen verbunden. Ist der Innenraum 8 des Hüllrohrs evakuiert, so reicht ein derartiges Ventil aus, das dann zur Verbesserung des Vakuums über eine Absaugleitung mit einer Absaugpumpe verbunden ist.

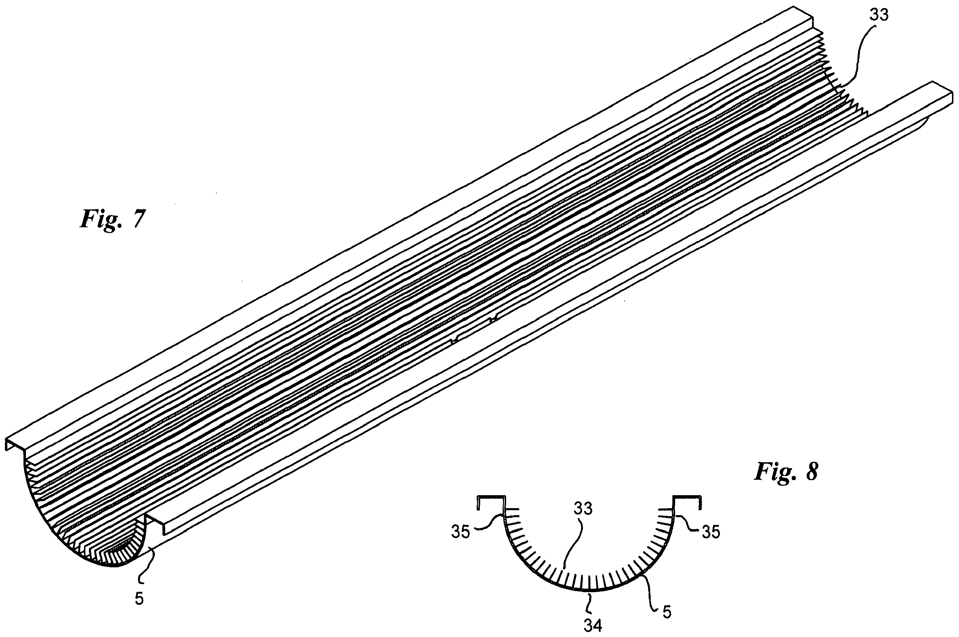

Bei den in den Fig. 7 bis 10 dargestellten zweiten Mantelteilen 5 ist deren konkave, im montierten Zustand dem Absorberrohr zugewandte Innenfläche nicht glatt, sondern mit erhabenen, d.h. nach innen vorstehenden Strukturen 33 versehen, die bei den gezeigten Ausführungsbeispielen von radial gerichteten Lamellen gebildet werden, von denen jede sich parallel zur Längsachse des zweiten Mantelteils 5 über dessen gesamte Länge erstreckt.

Diese Lamellen, die mit dem zweiten Mantelteil 5 einstückig ausgebildet bzw. fest verbunden sind und ebenfalls reflektierende, insbesondere verspiegelte Oberflächen aufweisen können, dienen dazu, zumindest einen erheblichen Teil des Lichts, das von den (nicht dargestellten) Rinnenkollektoren beispielsweise wegen Abweichungen von der idealen Parabolform oder wegen einer nicht perfekten Ausrichtung nicht auf das Absorberrohr 2 gebündelt wird und daher auf die Innenseite des zweiten Mantelteils 5 trifft, durch einfache und/oder mehrfache Spiegelung auf das Absorberrohr hin umzulenken, um so einen zusätzlichen Beitrag zu dessen Erhitzung zu erzielen.

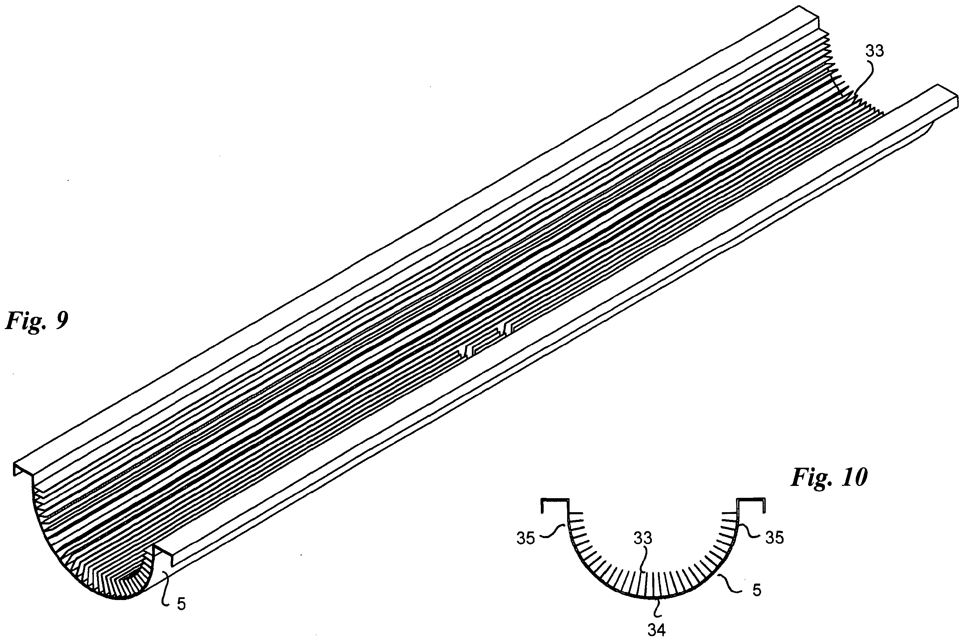

Wie man insbesondere den Fig. 8 und 10 entnimmt, können die radialen Abmessungen der Lamellen bzw. die radialen Höhen, mit denen sie sich von der Innenwand des zweiten Mantelteils 5 zum Absorberrohr hin erstrecken, gleich (Fig. 7 und 8) oder voneinander verschieden sein (Fig. 9 und 10). Letzteres hat den Vorteil, dass es zu einer verminderten Abschattung der näher beim Scheitel 34 des zweiten Mantelteils 5 befindlichen Lamellen durch die mehr zu seinen Randbereichen 35 hin angeordneten Lamellen kommt.

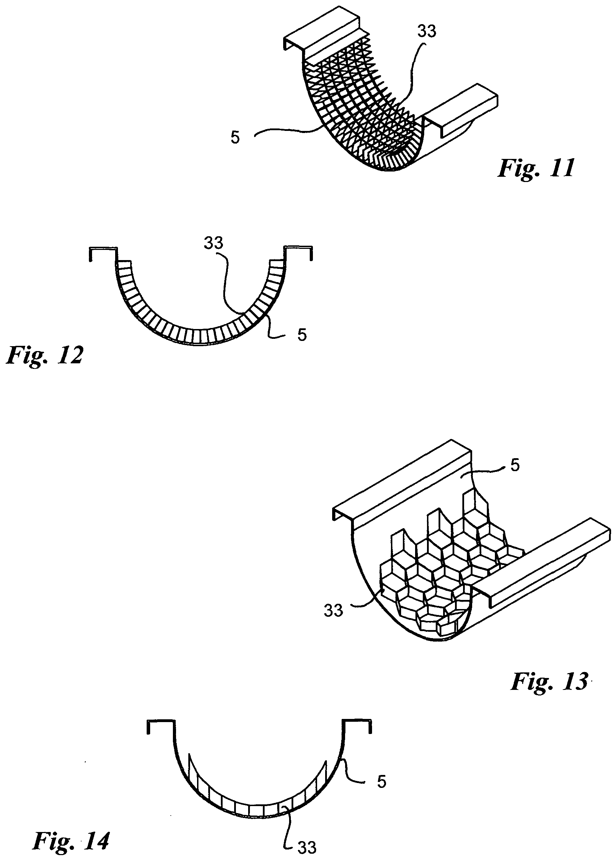

Fig. 11 zeigt in perspektivischer Ansicht ein kurzes Teilstück eine zweiten Mantelteils 5, der über seine gesamte axiale Länge hinweg auf seiner konkaven Innenseite Strukturen 33 aufweist, die zusätzlich zu den sich in Längsrichtung erstreckenden Lamellen der in den Fig. 7 bis 10 wiedergegebenen Ausführungsbeispiele in Umfangsrichtung verlaufende Lamellen umfassen, die ebenfalls über die innere Oberfläche des zweiten Mantelteils 5 in radialer Richtung nach oben vorstehen und mit den in Längsrichtung verlaufenden Lamellen in etwa rechte Winkel einschließen, sodass eine Vielzahl von Zellen mit in etwa rechteckigem, insbesondere quadratischem Grundriss gebildet wird. In den Fig. 11 und 12 haben alle diese Lamellen die gleiche radiale Erstreckung bzw. Höhe, doch ist auch hier in Analogie zu den Fig. 9 und 10 eine Höhenverringerung zu den Randbereichen des zweiten Mantelteils 5 hin möglich.

Gleiches gilt auch für die in den Fig. 13 und 14 gezeigten Strukturen 33, bei denen keine geradlinig durchlaufenden Lamellen vorhanden sind, sondern durch eine Vielzahl von in radialer Richtung über die innere Oberfläche des zweiten Mantelteils nach zum Absorberrohr hin vorstehende Wände wabenförmigen Zellen mit polygonalem Grundriss ausgebildet sind, die wiederum zumindest einen großen Teil der inneren Oberfläche des zweiten Mantelteils 5 bedecken.

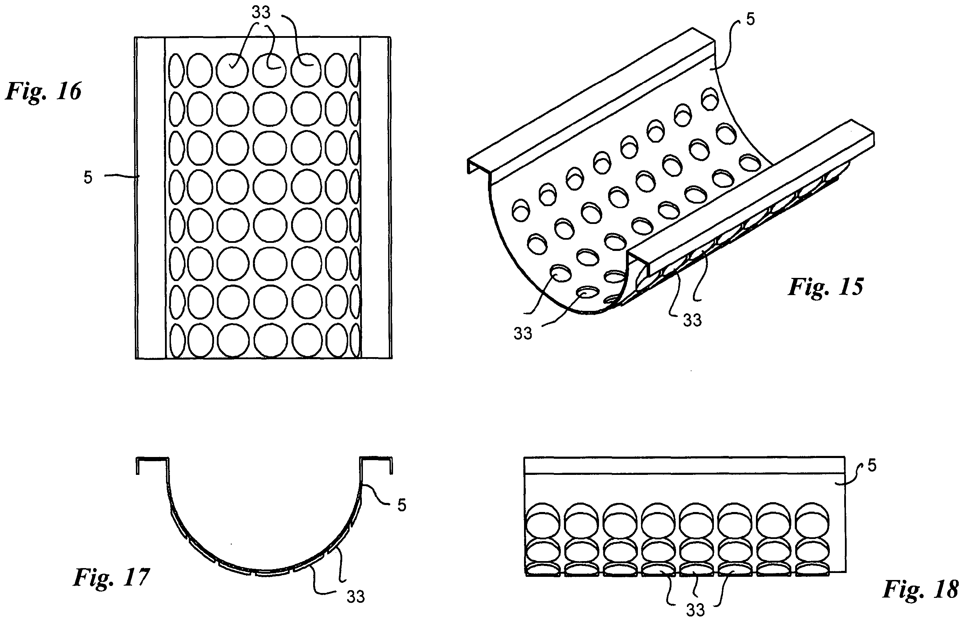

Wie die Fig. 16 bis 18 zeigen, müssen die zu Abweichungen von der glatten Oberfläche des zweiten Mantelteils 5 führenden Strukturen 33 nicht notwendigerweise erhaben sein, d.h. zum Absorberrohr 2 hin vorstehen. Vielmehr können sie auch von Vertiefungen in der Oberfläche des zweiten Mantelteils 5 gebildet werden, die radial nach außen, d.h. vom Aborberrohr 2 weg gerichtet sind und bei dem gezeigten Beispiel einen in etwa kreisförmigen Grundriss besitzen. Es sind aber auch andere, beispielsweise ovale, rechteckige oder polygonale Grundrisse möglich. Wesentlich ist, dass diese Strukturen, die beispielsweise durch einen einfachen Prägevorgang ausgebildet werden können, zu einer verbesserten Konzentration des Sonnenlichts auf das Absorberrohr beitragen.

Statt der in den Figuren gezeigten Strukturen, die von der inneren Oberfläche des zweiten Mantelteils 5 radial nach innen oder nach außen abstehen, können auch andere Strukturen vorgesehen sein, die eine Sekundärkonzentration der Sonnenstrahlung zum Absorberrohr 2 hin bewirken. So ist es z.B. möglich, der im Prinzip vom Absorberrohr her gesehen konkaven Wand des zweiten Mantelteils im Querschnitt wellen-, dreiecks-, trapez- oder rechtecksförmige Strukturen zu überlagern.

## Patentansprüche

1. Sonnen-Rinnenkollektor, der folgende Bestandteile aufweist:
- einen rinnenförmigen Reflektor, der die auf ihn auftreffende Sonnenstrahlung auf eine Brennlinie hin bündelt, und
- ein Receiverrohr (1), das folgendes umfasst:
- ein im montierten Zustand des Receiverrohrs (1) sich auf der Brennlinie des Rinnenkollektors erstreckendes Absorberrohr (2), das als Teil eines Strömungsweges für ein Wärmeträgermedium ausgebildet ist, und
- ein gasdicht verschlossenes Hüllrohr in dessen Innenraum (8) das Absorberrohr (2) verläuft, wobei der Strömungsweg für das Wärmeträgermedium in den Endbereichen des Hüllrohrs durch dessen Wand hindurch nach außen geführt ist,
**dadurch gekennzeichnet,**
**dass** das Hüllrohr wenigstens zwei Mantelteile (4, 5) umfasst, die sich im montierten Zustand des Receiverrohrs (1) in Richtung der Brennlinie erstrecken und entlang von Mantellinien gasdicht miteinander verbunden sind, dass der erste Mantelteil (4), der im montierten Zustand dem Rinnenkollektor zugewandt ist, aus einem für die Sonnenstrahlung durchlässigen Material besteht,
**dass** der zweite Mantelteil (5) aus einem bruchfesten Material besteht,
und **dass** der Strömungsweg für das Wärmeträgermedium durch einen nicht vom ersten Mantelteil (4) gebildeten Teil der Wand des Hüllrohrs hindurch nach außen geführt ist.

2. Sonnen-Rinnenkollektor nach Anspruch 1, **dadurch gekennzeichnet, dass** sich die beiden Mantelteile (4, 5) des Hüllrohrs über die gesamte Länge des Receiverrohrs (1) erstrecken.

3. Sonnen-Rinnenkollektor nach Anspruch 2, **dadurch gekennzeichnet, dass** der zweite Mantelteil (5) so geformt ist, dass er zumindest Teile der auf seine Innenseite auftreffenden Sonnenstrahlung auf das Absorberrohr (2) reflektiert.

4. Sonnen-Rinnenkollektor nach Anspruch 3, **dadurch gekennzeichnet, dass** der zweite Mantelteil (5) auf seiner dem Absorberrohr (2) zugewandten Innenseite von einer glatten Oberfläche abweichende Strukturen (33) aufweist, die auf sie auftreffende Sonnenstrahlung so reflektieren, dass sie zum Absorberrohr (2) hin gelenkt wird.

5. Sonnen-Rinnenkollektor nach Anspruch 4, **dadurch gekennzeichnet, dass** die von einer glatten Oberfläche abweichenden Strukturen (33) radial zum Absorberrohr (2) hin gerichtete, erhabene Strukturen (33) sind, die von in Längsrichtung des Receiverrohrs (1) verlaufenden Lamellen gebildet werden, die an der Innenwand des Mantelteils (5) so montiert sind, dass sie in radialer Richtung zum Absorberrohr (2) hin vorstehen.

6. Sonnen-Rinnenkollektor nach einem der vorhergehenden Ansprüche, **dadurch gekennzeichnet, dass** das Hüllrohr an jedem seiner beiden axialen Enden durch eine sich im Wesentlichen senkrecht zur Achse des Receiverrohrs (1) erstreckende Stirnwand (6, 7) verschlossen ist.

7. Sonnen-Rinnenkollektor nach Anspruch 6, **dadurch gekennzeichnet, dass** die Stirnwände (6, 7) aus dem gleichen Material bestehen wie der zweite Mantelteil (5).

8. Sonnen-Rinnenkollektor nach einem der vorhergehenden Ansprüche, **dadurch gekennzeichnet, dass** zwei thermisch isoliert montierte Durchführungs-Rohrstutzen (12, 13; 17,18) zum Hindurchführen des Strömungsweges für das Wärmeträgermedium durch die Wand des Hüllrohrs vorgesehen sind.

9. Sonnen-Rinnenkollektor nach Anspruch 8, **dadurch gekennzeichnet, dass** sich die Durchführungs-Rohrstutzen (12, 13) koaxial zum Absorberrohr (2) durch die Stirnwände (6, 7) hindurch erstrecken und mit dem Absorberrohr (2) jeweils durch ein Ausgleichselement (15, 16) verbunden sind, das für einen Ausgleich von unterschiedlichen Längenänderungen von Hüllrohr und Absorberrohr (2) sorgt.

10. Sonnen-Rinnenkollektor nach Anspruch 8, **dadurch gekennzeichnet, dass** sich die Durchführungs-Rohrstutzen (17,18) quer zur Längserstreckung des Absorberrohrs (2) durch den zweiten Mantelteil (5) des Hüllrohrs hindurch erstrecken und durch Rohrbogen (23, 24) mit dem axial verlaufenden Teil des Absorberrohrs (2) verbunden sind, die so gebogen sind, dass sie für einen Ausgleich von unterschiedlichen Längenänderungen von Hüllrohr und Absorberrohr (2) sorgen.

11. Sonnen-Rinnenkollektor nach einem der vorhergehenden Ansprüche, **dadurch gekennzeichnet, dass** eine sich durch die Wand des zweiten Mantelteils (5) hindurch erstreckende Ventilanordnung (30, 31) vorgesehen ist, mit deren Hilfe der Innenraum (8) des Receiverrohrs (1) evakuiert werden kann.

12. Sonnen-Rinnenkollektor nach einem der vorhergehenden Ansprüche, **dadurch gekennzeichnet, dass** eine sich durch die Wand des zweiten Mantelteils (5) hindurch erstreckende Ventilanordnung vorgesehen ist, mit deren Hilfe der Innenraum (8) des Receiverrohrs (1) mit einem Gas gefüllt bzw. gespült werden kann, das für eine thermische Isolation des Absorberrohrs (2) sorgt.

13. Sonnen-Rinnenkollektor nach einem der vorhergehenden Ansprüche, **dadurch gekennzeichnet, dass** im Innenraum (8) des Hüllrohrs wenigstens ein Temperatursensor zu Messen der Temperatur des Absorberrohrs (2) angeordnet ist.

14. Sonnen-Rinnenkollektor nach einem der vorhergehenden Ansprüche, **dadurch gekennzeichnet, dass** im Innenraum (8) des Hüllrohrs wenigstens ein Sensor zur Messung des Wasserstoff-Gehaltes der im Innenraum (8) vorhandenen Atmosphäre angeordnet ist.

15. Sonnen-Rinnenkollektor nach einem der vorhergehenden Ansprüche, **dadurch gekennzeichnet, dass** im Innenraum (8) des Hüllrohrs wenigstens ein Sensor zur Messung des Drucks der im Innenraum (8) vorhandenen Atmosphäre angeordnet ist.

## Claims

1. A solar trough collector comprising
- a trough reflector which focuses the solar radiation incident thereon towards a focal line and
- a receiver tube (1) which comprises:
- an absorber tube (2) which in the mounted condition of the receiver tube (1) extends on the focal line of the trough collector and which is in the form of part of a flow path for a heat carrier medium, and
- a gas-tightly closed casing tube, in the internal space (8) of which the absorber tube (2) extends, wherein the flow path for the heat carrier medium is passed outwardly through the wall of the casing tube in the end regions thereof,
**characterized**
**in that** the casing tube includes at least two case portions (4, 5) which, in the mounted condition of the receiver tube (1), extend in the direction of the focal line and are gas-tightly connected together along generatrices,
**in that** the first case portion (4) which, in the mounted condition is towards the trough collector, comprises a material which is transmissive for the solar radiation,
**in that** the second case portion (5) comprises a fracture-resistant material, and
**in that** the flow path (101) for the heat carrier medium is passed outwardly through a part of the wall of the casing tube, that is not formed by the first case portion (4).

2. A solar trough collector according to claim 1 **characterized in that** the two case portions (4, 5) of the casing tube extend over the entire length of the receiver tube (1).

3. A solar trough collector according to claim 2 **characterized in that** the second case portion (5) is so shaped that it reflects at least parts of the solar radiation incident on its inside onto the absorber tube (2).

4. A solar trough collector according to claim 3 **characterized in that** the second case portion (5) on its inside directed towards the absorber tube (2) has structures (33) which differ from a smooth surface and which reflect solar radiation incident thereon in such a way that it is deflected towards the absorber tube (2).

5. A solar trough collector according to claim 4 **characterized in that** the structures (33) differing from a smooth surface are raised structures (33) which are directed radially towards the absorber tube (2) and which are formed by fins which extend in the longitudinal direction of the receiver tube (1) and which are so mounted at the inside wall of the case portion (5) that they project in the radial direction towards the absorber tube (2).

6. A solar trough collector according to one of the preceding claims **characterized in that** at each of its two axial ends the casing tube is closed by an end wall (6, 7) extending substantially perpendicularly to the axis of the receiver tube (1).

7. A solar trough collector according to claim 6 **characterized in that** the end walls (6, 7) comprise the same material as the second case portion (5).

8. A solar trough collector according to one of the preceding claims **characterized in that** it includes two thermally insulatedly mounted through-flow pipe connections (12, 13; 17, 18) for passing the flow path for the heat carrier medium through the wall of the casing tube.

9. A solar trough collector according to claim 8 **characterized in that** the through-flow pipe connections (12, 13) extend through the end walls (6, 7) coaxially with respect to the absorber tube (2) and are respectively connected to the absorber tube (2) by a compensating element (15, 16) providing for compensation of different changes in length of the casing tube and the absorber tube (2).

10. A solar trough collector according to claim 8 **characterized in that** the through-flow pipe connections (17, 18) extend through the second case portion (5) of the casing tube transversely relative to the longitudinal extent of the absorber tube (2) and are connected to the axially extending part of the absorber tube (2) by pipe bends (23, 24) so bent that they provide for compensation of different changes in length of the casing tube and the absorber tube (2).

11. A solar trough collector according to claim 1 **characterized in that** it includes a valve arrangement (30, 31) which extends through the wall of the second case portion (5) and by means of which the internal space (8) of the receiver tube (1) can be evacuated.

12. A solar trough collector according to one of the preceding claims **characterized in that** it includes a valve arrangement which extends through the wall of the second case portion (5) and by means of which the internal space (8) of the receiver tube (1) can be filled or flushed with a gas which provides for thermal insulation of the absorber tube (2).

13. A solar trough collector according to one of the preceding claims **characterized in that** at least one temperature sensor for measuring the temperature of the absorber tube (2) is arranged in its internal space (8).

14. A solar trough collector according to one of the preceding claims **characterized in that** at least one sensor for measuring the water content of the atmosphere in the internal space (8) is arranged in its internal space (8).

15. A solar trough collector according to one of the preceding claims **characterized in that** at least one sensor for measuring the pressure of the atmosphere in the internal space (8) is arranged in its internal space (8).

## Revendications

1. Collecteur solaire cylindro-parabolique, comprenant les composants suivants :
- un réflecteur en forme de gouttière, qui concentre le rayonnement solaire incident sur une ligne focale, et
- un tube récepteur (1), comportant :
- un tube absorbant (2) s'étendant sur la ligne focale du collecteur cylindro-parabolique en état de montage du tube récepteur (1) et conçu comme partie d'une trajectoire d'écoulement d'un fluide caloporteur, et
- un tube de gainage clos de manière étanche aux gaz, à l'intérieur (8) duquel s'étend le tube absorbant (2), la trajectoire d'écoulement du fluide caloporteur étant guidée vers l'extérieur en traversant la paroi du tube de gainage dans les parties d'extrémité de celui-ci,
**caractérisé en ce que**
le tube de gainage comprend au moins deux parties de gaine (4, 5) qui s'étendent dans la direction de la ligne focale en état de montage du tube récepteur (1) et sont raccordées l'une à l'autre de manière étanche aux gaz le long de lignes de gaine,
**en ce que** la première partie de gaine (4), laquelle est opposée au collecteur cylindro-parabolique en état de montage, est en matériau perméable au rayonnement solaire,
**en ce que** la deuxième partie de gaine (5) est en matériau résistant à la rupture,
et **en ce que** la trajectoire d'écoulement du fluide caloporteur est guidée vers l'extérieur en traversant une partie de la paroi du tube de gainage non formée par la première partie de gaine (4).

2. Collecteur solaire cylindro-parabolique selon la revendication 1, **caractérisé en ce que** les deux parties de gaine (4, 5) du tube de gainage s'étendent sur toute la longueur du tube récepteur (1).

3. Collecteur solaire cylindro-parabolique selon la revendication 2, **caractérisé en ce que** la deuxième partie de gaine (5) est formée de manière à réfléchir vers le tube absorbant (2) au moins des fractions du rayonnement solaire incident sur sa face intérieure.

4. Collecteur solaire cylindro-parabolique selon la revendication 3, **caractérisé en ce que** la deuxième partie de gaine (5) présente sur sa face intérieure opposée au tube absorbant (2) des structures (33) différentes d'une surface lisse, lesquelles réfléchissent le rayonnement solaire qui leur est incident de manière à le dévier vers le tube absorbant (2).

5. Collecteur solaire cylindro-parabolique selon la revendication 4, **caractérisé en ce que** les structures (33) différentes d'une surface lisse sont des structures (33) en relief dressées radialement vers le tube absorbant (2), formées par des lamelles s'étendant dans le sens de la longueur du tube récepteur (1) et montées contre la paroi intérieure de la partie de gaine (5) de manière à faire saillie vers le tube absorbant (2) en direction radiale.

6. Collecteur solaire cylindro-parabolique selon l'une des revendications précédentes, **caractérisé en ce que** le tube de gainage est fermé à chacune de ses deux extrémités axiales par une paroi frontale (6, 7) s'étendant sensiblement perpendiculairement à l'axe du tube récepteur (1).

7. Collecteur solaire cylindro-parabolique selon la revendication 6, **caractérisé en ce que** les parois frontales (6, 7) sont constituées du même matériau que la deuxième partie de gaine (5).

8. Collecteur solaire cylindro-parabolique selon l'une des revendications précédentes, **caractérisé en ce que** deux tubulures de traversée (12, 13 ; 17, 18) montées de manière isolée thermiquement sont prévues pour le guidage de la trajectoire d'écoulement du fluide caloporteur au travers de la paroi du tube de gainage.

9. Collecteur solaire cylindro-parabolique selon la revendication 8, **caractérisé en ce que** les tubulures de traversée (12, 13) s'étendent en traversant les parois frontales (6, 7) coaxialement au tube absorbant (2) et sont raccordées au tube absorbant (2) chacune par un élément compensateur (15, 16) assurant une compensation pour diverses variations de longueur du tube de gainage et du tube absorbant (2).

10. Collecteur solaire cylindro-parabolique selon la revendication 8, **caractérisé en ce que** les tubulures de traversée (17, 18) s'étendent transversalement à la longueur du tube absorbant (2) en traversant la deuxième partie de gaine (5) du tube de gainage et sont raccordées par des coudes tubulaires (23, 24) à la partie à extension axiale du tube absorbant (2), lesdits coudes étant courbés de manière à assurer une compensation pour diverses variations de longueur du tube de gainage et du tube absorbant (2).

11. Collecteur solaire cylindro-parabolique selon l'une des revendications précédentes, **caractérisé en ce qu'**il est prévu un dispositif de valves (30, 31) s'étendant au travers de la paroi de la deuxième partie de gaine (5), au moyen duquel le vide peut être fait à l'intérieur (8) du tube récepteur (1).

12. Collecteur solaire cylindro-parabolique selon l'une des revendications précédentes, **caractérisé en ce qu'**il est prévu un dispositif de valves s'étendant au travers de la paroi de la deuxième partie de gaine (5), au moyen duquel l'intérieur (8) du tube récepteur (1) peut être rempli ou rincé par un gaz assurant une isolation thermique du tube absorbant (2).

13. Collecteur solaire cylindro-parabolique selon l'une des revendications précédentes, **caractérisé en ce qu'**au moins un capteur de température est disposé à l'intérieur (8) du tube de gainage pour mesurer la température du tube absorbant (2).

14. Collecteur solaire cylindro-parabolique selon l'une des revendications précédentes, **caractérisé en ce qu'**au moins un capteur est disposé à l'intérieur (8) du tube de gainage pour mesurer la teneur en hydrogène de l'atmosphère présente à l'intérieur (8).

15. Collecteur solaire cylindro-parabolique selon l'une des revendications précédentes, **caractérisé en ce qu'**au moins un capteur est disposé à l'intérieur (8) du tube de gainage pour mesurer la pression de l'atmosphère présente à l'intérieur (8).
